# EUROPÄISCHE PATENTSCHRIFT

(11) **EP 1 287 285 B1**
(45) Veröffentlichungstag und Bekanntmachung des Hinweises auf die Patenterteilung: **25.05.2005**
(21) Anmeldenummer: 01944718.4
(22) Anmeldetag: 08.06.2001
(51) Int. Cl.: F17C 3/04, F17C 3/08, F17C 3/10

(54) **SPEICHERBEHÄLTER FÜR KRYOGENEN TREIBSTOFF**
STORAGE CONTAINER FOR CRYOGENIC FUEL
RESERVOIR D'ALIMENTATION POUR COMBUSTIBLE CRYOGENIQUE

(30) Priorität: 09.06.2000 AT 4372000 U
(43) Veröffentlichungstag der Anmeldung: 05.03.2003
(73) Patentinhaber: MI Developments Austria AG & Co KG, 8041 Graz-Thondorf (AT)
(72) Erfinder: BRUNNHOFER, Klaus, A-8010 Graz (AT)
(74) Vertreter: Kovac, Werner
(86) Internationale Anmeldenummer: PCT/AT2001/000190
(87) Internationale Veröffentlichungsnummer: WO 2001/094839

(56) Entgegenhaltungen:
- EP-A- 0 670 452
- FR-A- 2 091 139
- US-A- 3 838 576
- US-A- 4 988 014
- US-A- 5 226 299

## Beschreibung

Die Erfindung betrifft einen Speicherbehälter für kryogenen Treibstoff, insbesondere Wasserstoff, mit einem doppelwandigen Aufbau aus einem Innen- und einem Außenbehälter sowie mit einer Vakuumisolation, einer Multi-Layer-Isolation und einer von einem Kühlmittel durchströmbaren Kühlleitung im Raum zwischen den Behältern.

Wasserstoff gilt schon seit einiger Zeit als Motorenkraftstoff der Zukunft. Dabei ist die Speicherung des Wasserstoffs an Bord verschiedenster Verkehrsmittel, wie Flugzeuge, Kraftfahrzeuge etc. in flüssiger Form oder in Form von Wasserstoffmatsch am sinnvollsten. Flüssiger Wasserstoff wird mit einer Temperatur von etwa 20 K, Wasserstoffmatsch mit einer Temperatur von ca. 13,8 K zur Verfügung gestellt. Durch entsprechende Maßnahmen soll nun sichergestellt sein, dass der Wasserstoff diese Temperatur möglichst lange im Speicherbehälter behält.

Es ist nun grundsätzlich bekannt, zur Isolierung von Speicherbehältern oder von Rohrleitungen für kryogene Medien eine doppelwandige Konstruktion mit einer dazwischen wirkenden Vakuumisolierung und einer hier angeordneten Multi- Layer-Isolation vorzusehen. Ein Behälter der eingangs genannten Art ist aus der DE-A 2 022 774 bekannt. Im Raum zwischen dem Außen- und dem Innenbehälter sind eine Vakuumisolation und eine Superisolierung aus vielen Lagen abwechselnd aufgebrachten Strahlungsschildfolien und die Wärme schlecht leitenden Isolationsschichten eingebracht. In diese Superisolationspackung ist eine biegsame Abgasleitung eingewickelt. Es wird daher das im Behälter abdampfende Gas zur Kühlung des Strahlungsschildes verwendet, bevor es nach außen geleitet wird. Ein weiterer Speicherbehälter ist aus der US-A-4,292,062 bekannt. Bekannt ist es auch, an der Außenseite der Behälter oder Leitungen wärmeisolierendes Material, beispielsweise Schaumstoff, in entsprechender Dicke anzubringen. Eine voluminöse und daher meist auch schwere Isolation von Speicherbehältern, die in Kraftfahrzeugen oder Flugzeugen eingesetzt werden sollen, ist unerwünscht. Die bislang bekannten isolierenden Maßnahmen an Speicherbehältern für kryogenen Wasserstoff sind ferner trotz aufwändigem Aufbau unzureichend. Dies führt dazu, dass bei längeren Standzeiten im Inneren des Speicherbehälters Wasserstoff in einer Menge verdampft, die zu einem Überschreiten des maximalen Betriebsdrucks des Speicherbehälters führt, sodass der überschüssige Wasserstoffdampf abgeblasen werden muss, was einerseits einen Kraftstoffverlust und andererseits auch ein gewisses Sicherheitsrisiko bedeutet.

Der Erfindung liegt daher nun die Aufgabe zu Grunde, einen Speicherbehälter für kryogenen Treibstoff - insbesondere für flüssigen Wasserstoff oder Wasserstoffmatsch aber auch andere kryogene Treibstoffe, beispielsweise verflüssigtes Erdgas - so auszuführen, dass auch bei längeren Standzeiten derart wenig Wasserstoff verdampft, dass entweder der Zeitraum bis zu einem erforderlichen Abblasen wesentlich länger ist als bei den bekannten Systemen oder dass ein Abblasen überhaupt nicht mehr notwendig ist. Vor allem sollen die Strahlungsverluste nach außen möglichst gering sein

Gelöst wird die gestellte Aufgabe erfindungsgemäß dadurch, dass die Kühlleitung zwischen der Multi-Layer-Isolation und einem Thermalschild sowie in Kontakt mit diesen verläuft und Bestandteil eines geschlossenen und aktiv betreibbaren Kühlkreislaufes ist, welcher als weiteren Bestandteil eine von Kühlmittel durchströmbare und im Inneren des Innenbehälters verlaufende Kühlleitung aufweist.

Durch die bei einem erfindungsgemäß ausgeführten Behälter vorgesehene Kühlung der Multi- Layer- Isolation und eines weiteren Thermalschildes können die Strahlungsverluste deutlich verringert werden. Somit ist ein Verdampfen des kryogenen Treibstoffs im Speicherbehälter zumindest weitgehend verhinderbar. Ein Abblasen ist daher entweder überhaupt nicht mehr erforderlich oder es kann der Zeitraum bis zu einem erforderlichen Abblasen wesentlich länger sein als dies bei den bislang bekannten Speicherbehältern der Fall ist. Dabei erfolgt gleichzeitig eine Kühlung der Multi- Layer- Isolation und eine Kühlung des Thermalschildes.

Der Kühlkreislauf wird auf besonders einfache und effektive Weise von einem externen Kühlaggregat betrieben, welches insbesondere in Pulsrohr- Kühler ein Sterling- Kühler ist (Anspruch 2 und 3).

Der Wirkungsgrad des Thermalschildes ist dann besonders gut, wenn dieser aus einem besonders wärmeleitfähigen Metall, wie beispielsweise Aluminium, besteht und die Multi- Layer- Isolation möglichst komplett umgibt (Ansprüche 4 und 5).

Als Kühlmittel kommen beispielsweise Heliumgas oder Stickstoff in Frage. Dabei kann das Kühlmittel in den Kühlkreislauf mit einer gegenüber der Temperatur des kryogenen Treibstoffes geringeren Temperatur eingespeist werden (Anspruch 6). Dies ist dann zweckmäßig, wenn die Kühlleitung innerhalb des Behälters, die in Kontakt mit dem kryogenen Treibstoff ist, vom Kühlmittel durchströmt wird. Wird diese Kühlleitung vom Kühlkreislauf entkoppelt und lediglich die Kühlleitung bzw. die Kühlleitungen zwischen dem innen- und dem Außenbehälter mit dem Kühlmittel durchströmt so kann die Temperatur des Kühlmittels auch um einiges höher sein als die Temperatur des kryogenen Treibstoffes.

Ist die Kühlleitung im Inneren des Behälters in den Kühlkreislauf eingekoppelt lässt sich die Kühlleistung des Kühlmittels, beispielsweise des Heliumgases, dadurch besonders gut ausnützen, wenn das Kühlmittel zuerst das Kühlleitungssystem im Inneren des Behälters und anschließend die Kühlleitung(en) zwischen Innen- und Außenbehälter durchläuft (Anspruch 7).

Für eine optimale Kühlung ist es ferner von Vorteil, wenn eine elektronische Steuerung und Regelung vorgesehen sind, durch die das Kühlsystem, insbesondere in Abhängigkeit von der Durchflussgeschwindigkeit, der Durchflussmenge und der Temperatur des Kühlmittels an verschiedenen Stellen, steuerbar ist (Anspruch 8).

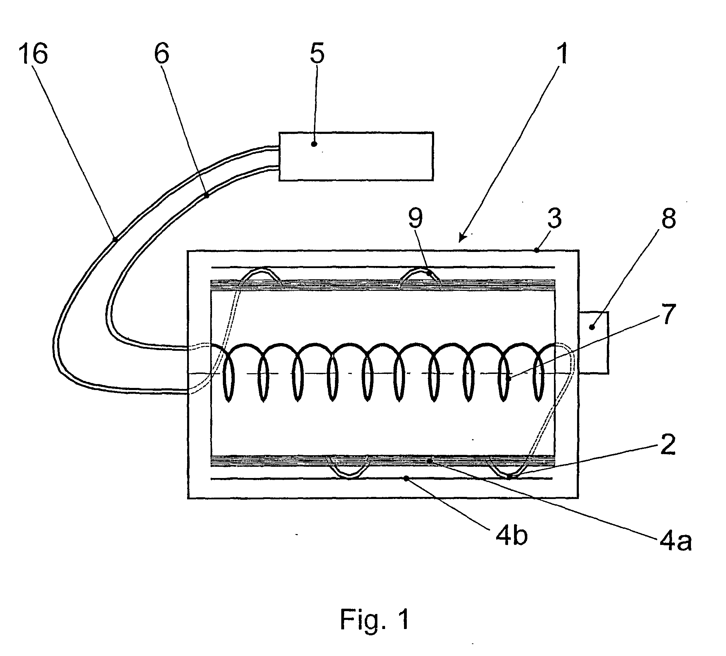

Eine Wärmeübertragung in das innere des Speicherbehälters kann weiter reduziert werden, wenn der Innenbehälter kontaktfrei magnetisch aufgehängt ist (Anspruch 9). Weitere Merkmale, Vorteile und Einzelheiten der Erfindung werden nun anhand der Zeichnung, die ein Ausführungsbeispiel eines erfindungsgemäßen Speicherbehälters darstellt, näher beschrieben. Dabei zeigt die einzige Zeichnungsfigur (Fig. 1) einen Längsschnitt durch einen lediglich schematisch dargestellten Speicherbehälter. Gezeigt ist auch ein außerhalb des Behälters angeordnetes und mit diesem zusammenwirkendes Kühlaggregat.

Wie die einzige Zeichnungsfigur zeigt, besteht der Speicherbehälter 1 aus einem Außenbehälter 3 und einem innenbehälter 2. Die beiden Behälter 2, 3 besitzen eine übereinstimmende Gestalt, sie sind beispielsweise zylindrisch ausgeführt. Der Abstand zwischen Innen- und Außenbehälter 2, 3 wird für den gesamten Speicherbehälter 1 vorzugsweise gleich groß gewählt. Die beiden Behälter 2, 3 können aus rostfreiem Stahl, aus Aluminium oder aus einem Glasfaserkomposit gefertigt sein. Der Abstand zwischen Innen- und Außenbehälter 2, 3 beträgt in der Größenordnung von einigen Millimetern bis zu einigen Zentimetern.

Das Befüllen des Speicherbehälters 1 mit flüssigem Treibstoff, beispielsweise Wasserstoff oder Wasserstoffmatsch, sowie die Entnahme desselben zum Betreiben eines Motors, beispielsweise eines Kraftfahrzeugmotors, sind nicht Gegenstand der vorliegenden Erfindung. Die diesbezüglich erforderlichen Maßnahmen sind daher nicht dargestellt und nicht beschrieben und können in bekannter Weise getroffen werden.

Der Raum zwischen den beiden Behältern 2, 3 wird zur Isolierung des Innenraumes des Speicherbehälters 1 genützt. Als isolierende Maßnahmen werden eine Vakuumisolierung - durch das Erzeugen und Aufrechterhalten eines Unterdruckes im

Raum zwischen den beiden Behältern 2, 3 - und im Raum zwischen den Behältern 2, 3 eine Multi-Layer-Isolation 4a und ein Thermalschild 4b vorgesehen. Die Multli-Layer-Isolation 4a besteht in an sich bekannter Weise aus einer Anzahl von Lagen aus einseitig reflektierend ausgerüsteten Folien, beispielsweise aus Papier, die mit Aluminium beschichtet sind. Die Multi-Layer-Isolation 4a umfasst beispielsweise 10 bis 20 Lagen von auf der Außenseite des Innenbehälters 2 angeordneten Lagen, wobei die reflektierenden Seiten parallel zur Oberfläche des Innenbehälters 2 ausgerichtet sind. In einem Abstand zum Außenbehälter 3 ist die Multi-Layer-Isolation 4a vom Thermalschild 4b umgeben, welcher seinerseits in einem Abstand von der Innenseite des Außenbehälters 3 angeordnet ist.

Der Thermalschild 4b ist der Form des Innenbehälters 2 angepasst und somit, bei rundem Behälter 2, ein zylindrisches Teil aus Metall, insbesondere aus Aluminium oder einem anderen Wärme leitenden und reflektierenden und tieftemperaturbeständigen Material.

Zwischen dem Thermalschild 4b und der Multi- Layer- Isolation 4a verläuft eine Kühlleitung 9, die Bestandteil eines Kühlkreislaufes ist. Die Kühlleitung 9 umläuft die Multi- Layer- Isolation 4a spiralförmig in Windungen und ist dabei sowohl mit dieser als auch dem Thermalschild 4b in Kontakt. Die Kühlleitung 9 wird von einem Kühlmittel durchströmt, auf welches weiter unten noch eingegangen wird.

Der Kühlkreislauf wird von einem Kühlaggregat 5, welches ein Pulsrohr- Kühler oder ein Sterling- Kühler sein kann, betrieben. Pulsrohr- Kühler sind in unterschiedlichen Ausführungsformen bekannt, wobei diesbezüglich beispielsweise auf die aus der US-A 5,791,149 oder US 5,966,943 bekannten Pulsrohr- Kühler verwiesen wird, die im Rahmen der gegenständlichen Erfindung eingesetzt werden können. Mit dem Pulsrohr- Kühler wird ein Kühlmittel, bei Wasserstoff als Treibstoff etwa Heliumgas, auf eine Temperatur von beispielsweise 16 K abgekühlt und in den Kühlsystem- Kreislauf geleitet.

Ein weiterer Bestandteil des Kühlkreislaufes ist eine vom Kühlaggregat 5 über entsprechend isolierte Leitung 6 versorgbare im Inneren des Speicherbehälters 1 verlaufende Kühlleitung 7, die vorzugsweise spiralförmig und durch das Kühlmittel den im Inneren des Speicherbehälters 1 befindlichen kryogenen Treibstoff kühlt. Die Zeichnungsfigur zeigt schematisch nur eine einzige spiralig verlaufende Kühlleitung 7, es kann jedoch ein wesentlich komplexer ausgeführtes Kühlleitungs- System im Inneren des Speicherbehälters 1 vorgesehen werden, insbesondere, um bei unterschiedlichen

Füllständen an kryogenem Treibstoff eine wirkungsvolle Kühlung der im Speicherbehälter 1 befindlichen Treibstoffmenge zu gewährleisten. An Stelle einer Spiralform kann auch ein schlingenförmiger Verlauf für die Kühlleitung 7 im Innern des Speicherbehälters 1 vorgesehen sein. Die Schlingen bzw. Spiralen der Kühlleitung 7 vermindern ferner wirkungsvoll ein Schwappen des Treibstoffs.

Die Kühlleitung(en) 7 verläuft bzw. verlaufen insbesondere in der Längsrichtung des Speicherbehälters 1 und mündet bzw. münden insbesondere an dem der Zuführung abgewandten Endbereich des Speicherbehälters 1 in die weitere Kühlleitung 9, die spiralförmig die Multi-Layer-Isolierung 4a im Raum zwischen den beiden Behältern 2, 3 umläuft. Dadurch erfolgt wieder eine Rückführung des Kühlmittels zum ursprünglichen Einspeisebereich. Über eine weitere, entsprechend isolierte Leitung 16 erfolgt außerhalb des Speicherbehälters 1 eine Rückführung des Kühlmittels zum Kühlaggregat 5.

Über eine entsprechend ausgelegte elektronische Steuerung 8 kann, beispielsweise unter Berücksichtigung der Durchfließmenge und der Durchflussgeschwindigkeit des Kühlmittels und in Abhängigkeit von dessen Temperatur an unterschiedlichen Stellen des Kühlsystems eine Regelung und Steuerung der Kühlung und der Kühlleistung erfolgen. Wird daher beispielsweise Heliumgas mit einer Temperatur von etwa 16 K in die Kühlleitung bzw. das Kühlleitungssystem 7 eingespeist, kann durch die Temperatursteuerung 8 sichergestellt werden, dass das Heliumgas mit einer Temperatur von etwa 20 K in die zwischen den beiden Behältern 2, 3 verlaufende Kühlleitung 9 eintritt. Hier erfolgt nun eine Kühlung der Multi-Layer-Isolation 4a und des Thenralschildes 4b, wobei beim Austritt aus dem Speicherbehälter 1 eine weitere

Erwärmung des Heliumgases auf beispielsweise etwa 24 K stattgefunden haben kann.
Über die Leitung 16 erfolgt eine Rückführung des Heliumgases zum Kühlaggregat 5 und wieder eine Abkühlung auf die erwünschte Ausgangstemperatur.

Bei einer nicht dargestellten Variante des Speicherbehälters kann vorgesehen werden, die Kühlleitung(en) 7 im Inneren des Behälters vom Kühlkreislauf zu entkuppeln und nur die Kühlleitung(en) 9 zwischen Innen- und Außenbehälter 2,3 mit Kühlmittel zu versorgen. Bei Bedarf kann bzw. können (automatisch) die Kühlleitung(en) 9 wieder in den Kreislauf eingebunden werden. Ist bzw. sind die Kühlleitung(en) 9 entkuppelt, kann der Kühlkreislauf mit einem auf entsprechend höherer Temperatur befindlichen Kühlmittel betrieben werden.

Mit der Erfindung ist es ohne weiteres möglich, die Standzeiten bis zu einem etwaig notwendigen Abblasen von entstehendem Treibstoffdampf im Speicherbehälter 1 deutlich zu verlängern. Durch eine entsprechende Auslegung des aktiven Kühlsystems und der passiven Isolierung kann es sogar möglich sein, ein Verdampfen des im Speicherbehälter befindlichen kryogenen Treibstoffs weitgehend zu verhindern.
Abdampfendes Wasserstoffgas kann ferner über Brennstoffzellen elektrischen Strom erzeugen, welcher zum Betreiben des Pulsrohr- Kühlers verwendet werden kann.

Um die Übertragung von Wärme von dem auf Umgebungstemperatur befindlichen Außenbehälter auf den kalten Innenbehälters weiter zu reduzieren, kann der Innenbehälter kontaktfrei mit Hilfe von Supraleitern und starken Permanentmagneten aufgehängt werden. Derartige Konstruktionen sind bereits in der Literatur vorgeschlagen worden und es wird diesbezüglich beispielsweise auf den Artikel "LH₂-Kryobehälter mit HTSS-Lagerung des Innentanks", VDI-Tagung Kryotechnik, Gelsenkirchen, Oktober 1998, verwiesen.

Erfindungsgemäß ausgeführte Treibstoffbehälter können auch für andere Treibstoffe als Wasserstoff eingesetzt werden. In Frage kommt beispielsweise verflüssigtes Erdgas, wobei sich in diesem Fall Stickstoff als Kühlmittel eignet.

Erwähnt sei ferner, dass der Einsatz eines erfindungsgemäß ausgeführten Speicherbehälters 1 nicht auf Kraftfahrzeuge beschränkt ist.

## Patentansprüche

1. Speicherbehälter für kryogenen Treibstoff, insbesondere Wasserstoff, mit einem doppelwandigen Aufbau aus einem Innen- und einem Außenbehälter sowie mit einer Vakuumisolation, einer Multi-Layer-lsolation und einer von einem Kühlmittel durchströmbaren Kühlleitung im Raum zwischen den Behältern,
**dadurch gekennzeichnet,**
**dass** die Kühlleitung (9) zwischen der Multi-Layer-Isolation (4a) und einem. Thermalschild (4b) sowie in Kontakt mit diesen verläuft und Bestandteil eines geschlossenen und aktiv betreibbaren Kühlkreislaufes ist, welcher als weiteren Bestandteil eine von Kühlmittel durchströmbare und im Inneren des Innenbehälters (2) verlaufende Kühlleitung (7) aufweist.

2. Speicherbehälter nach Anspruch 1, **dadurch gekennzeichnet, dass** der Kühlkreislauf von einem externen Kühlaggregat betreibbar ist

3. Speicherbehälter nach Anspruch 2, **dadurch gekennzeichnet, dass** das Kühlaggregat (5) ein Pulsrohr- Kühler oder ein Sterling- Kühler ist.

4. Speicherbehälter nach einem der Ansprüche 1 bis 3, **dadurch gekennzeichnet, dass** der Thermalschild (4b) aus einem wärmeleitfähigen Metall, beispielsweise aus Aluminium, besteht

5. Speicherbehälter nach einem der Ansprüche 1 bis 4, **dadurch gekennzeichnet, dass** der Thermalschild (4b) die Multi- Layer- Isolation (4a) bzw. den Innenbehälter (2) weitgehend komplett umgibt.

6. Speicherbehälter nach einem der Ansprüche 1 bis 5, **dadurch gekennzeichnet, dass** das Kühlmittel in den Kühlkreislauf mit einer gegenüber der Temperatur des kryogenen Treibstoffes geringeren Temperatur eingespeist wird und vorzugsweise Heliumgas oder Stickstoff ist.

7. Speicherbehälter nach einem der Ansprüche 1 bis 6, **dadurch gekennzeichnet, dass** das Kühlmittel zuerst die Kühlleitung (7) im Inneren des Behälters (1) und anschließend die kühlleitung (9) zwischen Innen- und Außenbehälter (2, 3) durchläuft.

8. Speicherbehälter nach einem der Ansprüche 1 bis 7, **dadurch gekennzeichnet, dass** eine elektronische Steuerung (8) vorgesehen ist, durch die das Kühlsystem, insbesondere in Abhängigkeit von der Durchflussgeschwindigkeit, der Durchflussmenge und der Temperatur des Kühlmittels an verschiedenen Stellen, steuerbar ist.

9. Speicherbehälter nach einem der Ansprüche 1 bis 8, **dadurch gekennzeichnet, dass** der Innenbehälter (3) kontaktfrei magnetisch aufgehängt ist.

## Claims

1. Storage container for a cryogenic propellant, especially hydrogen, having a double-walled construction comprising an interior and an exterior container and having a vacuum insulation, a multilayer insulation and a refrigeration line, through which a refrigerant can flow in the space between said interior and exterior containers, **characterized in that** the refrigeration line (9) extends between the multilayer insulation (4a) and a thermal shield (4b) and in contact with the latter, and forms part of a self-contained and actively operated refrigerant circuit, which comprises as a further component a refrigeration line (7) through which refrigerant can flow and which extends in the interior of the interior container (2).

2. Storage container according to claim 1, **characterized in that** the refrigeration circuit can be operated by an external refrigeration unit.

3. Storage container according to claim 2, **characterized in that** the refrigeration unit (5) is a pulse tube refrigerator or a Sterling refrigerator.

4. Storage container according to one of claims 1 to 3, **characterized in that** the thermal shield (4b) consists of a heat-conducting metal, for example aluminum.

5. Storage container according to one of claims 1 to 4, **characterized in that** the thermal shield (4b) encloses the multilayer insulation (4a) and/or the interior container (2) substantially completely.

6. Storage container according to one of claims 1 to 5, **characterized in that** the refrigerant is fed into the refrigeration circuit at a temperature lower than the temperature of the cryogenic propellant and is preferably gaseous helium or nitrogen.

7. Storage container according to one of claims 1 to 6, **characterized in that** the refrigerant passes first through the refrigeration line (7) in the interior of the container (1) and subsequently through the refrigeration line (9) between the interior and exterior containers (2, 3).

8. Storage container according to one of claims 1 to 7, **characterized in that** an electronic control system (8) is provided, whereby the refrigeration system can be controlled, in particular as a function of the rate of through flow, the quantity of through flow and the temperature of the refrigerant at various points.

9. Storage container according to one of claims 1 to 8, **characterized in that** the interior container (3) is magnetically suspended without contact.

## Revendications

1. Réservoir de stockage pour combustible cryogène, en particulier de l'hydrogène, lequel réservoir présente une structure à double paroi constituée d'un conteneur intérieur et d'un conteneur extérieur ainsi que d'une isolation sous vide, d'une isolation multicouche, et d'une conduite de refroidissement traversée par un agent de refroidissement disposée dans l'espace ménagé entre les conteneurs,
**caractérisé en ce que**
la conduite de refroidissement (9) s'étend entre l'isolation multicouche (4a) et un écran thermique (4b) en étant en contact avec ceux-ci, et elle fait partie d'un circuit de refroidissement fermé pouvant être utilisé de façon active, qui comporte comme autre composant une conduite de refroidissement (7) traversée par un agent de refroidissement et s'étendant à l'intérieur du conteneur intérieur (2).

2. Réservoir de stockage selon la revendication 1, **caractérisé en ce que** le circuit de refroidissement peut être utilisé par une unité de refroidissement extérieure.

3. Réservoir de stockage selon la revendication 2, **caractérisé en ce que** l'unité de refroidissement (5) est un refroidisseur à tube pulsé ou un refroidisseur de Sterling.

4. Réservoir de stockage selon l'une des revendications 1 à 3, **caractérisé en ce que** l'écran thermique (4b) est en un métal thermiquement conducteur, par exemple en aluminium.

5. Réservoir de stockage selon l'une des revendications 1 à 4, **caractérisé en ce que** l'écran thermique (4b) entoure quasiment totalement l'isolation multicouche (4a) ou le conteneur intérieur (2).

6. Réservoir de stockage selon l'une des revendications 1 à 5, **caractérisé en ce que** l'agent de refroidissement est introduit dans le circuit de refroidissement à une température inférieure à la température du combustible cryogène, et est avantageusement de l'hélium en état gazeux ou de l'azote.

7. Réservoir de stockage selon l'une des revendications 1 à 6, **caractérisé en ce que** l'agent de refroidissement traverse tout d'abord la conduite de refroidissement (7) à l'intérieur du réservoir (1), puis la conduite de refroidissement (9) entre les conteneurs intérieur et extérieur (2, 3).

8. Réservoir de stockage selon l'une des revendications 1 à 7, **caractérisé en ce qu'**une commande électronique (8) est prévue qui permet de commander en différents endroits le système de refroidissement, en particulier en fonction de la vitesse d'écoulement, du débit et de la température de l'agent de refroidissement.

9. Réservoir de stockage selon l'une des revendications 1 à 8, **caractérisé en ce que** le conteneur intérieur (3) est suspendu sans contact par des moyens magnétiques.
